Europäisches Patentamt

European Patent Office

Office européen des brevets

(11) Publication number: **0 488 541 A1**

# EUROPEAN PATENT APPLICATION

(21) Application number: **91310270.3**

(22) Date of filing: **06.11.91**

(51) Int. Cl.5: **F16B 23/00, B25B 15/00**

(30) Priority: **26.11.90 JP 322001/90**

(43) Date of publication of application:
**03.06.92 Bulletin 92/23**

(84) Designated Contracting States:
**AT BE CH DE DK ES FR GB IT LI NL SE**

(71) Applicant: **YUGENKAISHA SHINJO
SEISAKUSHO**
**1-22, Matsu 3-chome**
**Nishinariku, Osaka(JP)**

(72) Inventor: **Shinjo, Katsumi, c/o Yugenkaisha
Shinjo Seisakusho**
**1-22, Matsu 3-chome, Nishinari-ku**
**Osaka(JP)**

(74) Representative: **Purvis, William Michael
Cameron et al**
**D. Young & Co. 10 Staple Inn**
**London WC1V 7RD(GB)**

(54) **A recessed screw and a driver bit engageable therewith.**

(57) A recessed screw (10) has in its head a recess (12) to be engaged by a driver bit (20), the recess 12 being a superimposition of two square holes disposed symmetrically with a phase shift of 45° around the longitudinal axis so as to provide eight corner grooves (13), with curved sticking walls (16). Each sticking wall (16) is a portion of a conical surface slanted inwardly towards a bottom of the recess (12). Each corner groove (13) extends outwards from the adjacent sticking walls (16) in a radial direction. A pair of vertical side walls (14a, 14b) lying parallel with the longitudinal axis of the screw define each of the corner grooves. The driver bit (20) has a protrusion tightly fittable in the recess (12) formed with eight V-shaped grooves extending axially of the bit so that eight blades (23) are defined each between two of the V-shaped grooves. The bottom of each V-shaped groove is formed as a curved wall (25) closely to contact a respective one of the sticking walls (16) in the recess. In an alternative construction the sticking walls in the recess (12) are provided at the bottoms of the grooves (13) and the curved walls of the blades (23) are provided at the tips thereof.

FIG. 1

FIG. 2

The invention relates to a recessed screw having a recess formed in the head thereof to receive a driver bit and to a driver bit engageable in the recess of such a recessed screw.

The most frequently found recess formed in a screw head for engagement with a driver bit is the so-called Phillips type, in which the recess is of a cross shape. The cross shaped recess has in general torque transmitting walls which are slanted inwardly towards the bottom of the recess. These slanted walls of the cross recess are likely to cause so-called "ride-out" of the driver bit, in other words, the bit tends to disengage from and ride out of the recess when a strong screwing torque is imparted to the bit. In addition to such a problem, a sufficiently strong torque cannot be applied to the driver bit because it has only four blades or ridges.

It also has been proposed to employ a recess of other, modified shapes including a hexagonal recess, in place of the cross recess, in order that a higher torque can be imparted to the modified recess than in the case of the cross recess.

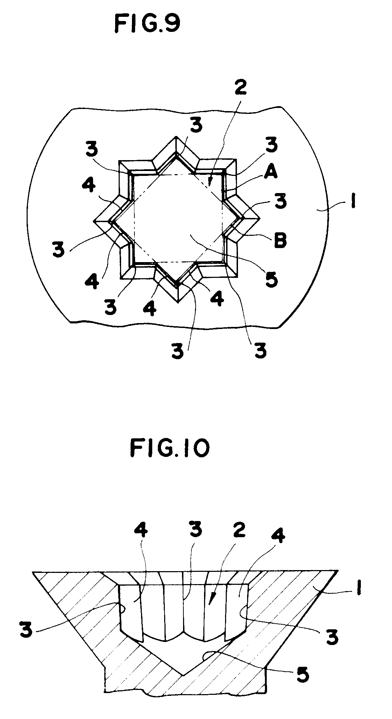

An example of such a modified recess is shown in Figures 9 and 10 of the accompanying drawings, in which a screw head 1 has a driver bit-engaging recess 2 comprising two holes each square in transverse cross section, as indicated by dotted lines "A" and "B". The square holes are superimposed one upon another, are disposed symmetrically and have a phase shift of 45° about the longitudinal axis of the screw. Eight corner grooves 3 are each defined by a pair of side walls 4, 4 which are perpendicular to each other and extend towards a bottom 5 of the recess 2 (see for example patent specifications US-A-3,604,305 and US-A-4,384,812).

It should however be noted that screws having the modified recess 2 as exemplified above may also have the side walls 4, similarly to the cross recess, slanted inwardly towards the bottom 5. Such slanted walls will facilitate the sticking or biting of the driver bit in the recess, but will inevitably cause the so-called "ride-out" problem.

It may be possible to form the side walls 4 to extend not slanted but straight in parallel with the screw axis so as to avoid ride-out. This hypothetical shape will be effective to transmit a higher torque giving a stronger screwing force. However, a slight clearance necessary for the recess smoothly to receive the driver bit is disadvantageous in that the bit will be held in the recess 2 in a shaky state. In a case where the screw is a so-called self-drilling screw which is driven at much higher speeds by the driver bit, it will probably slip out of the hypothetical recess. Further, the initial engagement of the driver bit in the recess may be so poor that the screwing operation cannot easily be performed by an automatic tool.

According to one aspect of the invention there is provided a recessed screw comprising:

a recess formed in a head of the screw and engageable with a driver bit;

the recess being defined with a plurality of sticking walls and a plurality of radial grooves;

each sticking wall being a portion of a conical surface slanted inwardly towards a bottom of the recess; and

each radial groove being disposed between two adjacent arms of the sticking walls, extending outwards from the sticking walls in a radial direction, and being defined by vertical walls extending parallel to a longitudinal axis of the recessed screw.

According to another aspect of the invention there is provided a driver bit tightly fittable in the recess of such a recessed screw.

According to a further aspect of the invention there is provided a recessed screw comprising:

a recess which is formed as a superimposition of two holes square in their transverse cross sections;

the holes being disposed symmetrically with a phase shift of 45° around a longitudinal axis of the recessed screw; and the recess having:

eight corner grooves, each being defined by a pair of side walls extending parallel to a longitudinal axis of the recessed screw; and

conically curved sticking walls each formed at a place where one of the side walls forming one of the corner grooves intersects one of the side walls forming another of the corner grooves adjacent to said one of the corner grooves;

wherein each of the sticking walls is a portion of a conical surface which is inwardly slanted towards a bottom of the recess.

According to a still further aspect of the invention there is provided a driver bit tightly fittable in the recess of such a recessed screw, the driver bit comprising:

a shank;

a bit portion extending from the shank and having at an extremity of the portion a pointed central end;

the bit portion being formed with:

eight V-shaped grooves which extend axially of the driver bit;

eight blades each defined between the adjacent ones of the V-shaped grooves; and

planes which are formed each at a bottom of each V-shaped groove so as to connect feet of the adjacent blades;

wherein each plane is a conically curved wall capable of coming into close contact with the conical surface of any of the sticking walls in the recess.

According to yet another aspect of the invention there is provided a recessed screw comprising:

a recess which is formed as a superimposition of two holes square in their transverse cross sections;

the holes being disposed symmetrically with a phase shift of 45° around a longitudinal axis of the recessed screw; and the recess having:

eight corner grooves, each being defined by a pair of side walls extending in parallel to a longitudinal axis of the recessed screw; and

conically curved sticking walls each formed at a place where the side walls forming each corner groove intersect one another;

wherein each of the sticking walls is a portion of a conical surface which is inwardly slanted towards a bottom of the recess.

According to still another aspect of the invention there is provided a driver bit tightly fittable in the recess of such a recessed screw, the driver bit comprising:

a shank;

a bit portion extending from the shank and having at an extremity of the portion a pointed central end;

the bit portion being formed with:

eight V-shaped grooves which extend axially of the driver bit;

eight blades each defined between the two adjacent ones of the V-shaped grooves;

wherein a top of each blade is a conically curved wall capable of coming into close contact with the conical surface of any of the sticking walls in the recess.

According to an even further aspect of the invention there is provided a recessed screw comprising:

a recess formed in a head of the screw and engageable with a driver bit;

the recess being defined with a plurality of sticking walls and a plurality of radial grooves;

each sticking wall being a portion of a conical surface slanted inwardly towards a bottom of the recess; and

each radial groove being defined by a pair of vertical walls extending parallel to a longitudinal axis of the recessed screw and each sticking wall being disposed between two adjacent ones of the vertical walls.

With a recess of such a shape, smooth and strong initial sticking or biting of the driver bit can be ensured and ride-out thereof will not occur even when transmitting a high torque. High speed rotation of the bit can be used without any problem.

Due to the shapes of the cooperating members as described above, with the driver bit being inserted in the recess in the screw, the conically curved walls of the driver bit can closely contact and engage with the sticking walls in the recess so that tight sticking, ie biting, of the driver bit can be ensured initially and maintained thereafter without failure.

In use, a torque will be applied to the thus fitted driver bit thereby to cause a friction of determined strength between the tightly contacting surfaces. Then, with a higher torque exceeding the friction, the driver bit will rotate through a very small angle so that side surfaces of the eight blades come into contact with the corresponding side walls of the corner grooves in the recess in the screw, and thus a sufficient torque will be transmitted forcibly to rotate the recessed screw.

The invention is diagrammatically illustrated by way of example in the accompanying drawings, in which:

Figure 1 is a plan view of a recessed screw according to a first embodiment of the invention;

Figure 2 is a partial vertical cross section corresponding to Figure 1;

Figure 3 is a perspective view showing part of a driver bit engageable with the recessed screw of Figures 1 and 2;

Figures 4 and 5 are enlarged cross sections showing the driver bit of Figure 3 fitted in and rotating the recessed screw of Figures 1 and 2;

Figure 6 is a plan view of a recessed screw according to a second embodiment of the invention;

Figure 7 is a partial vertical cross section corresponding to Figure 6;

Figure 8 is a perspective view showing part of a driver bit engageable with the recessed screw of Figure 6;

Figure 9 is a plan view of a prior art recessed screw; and

Figure 10 is a partial vertical cross section through the recessed screw of Figure 9.

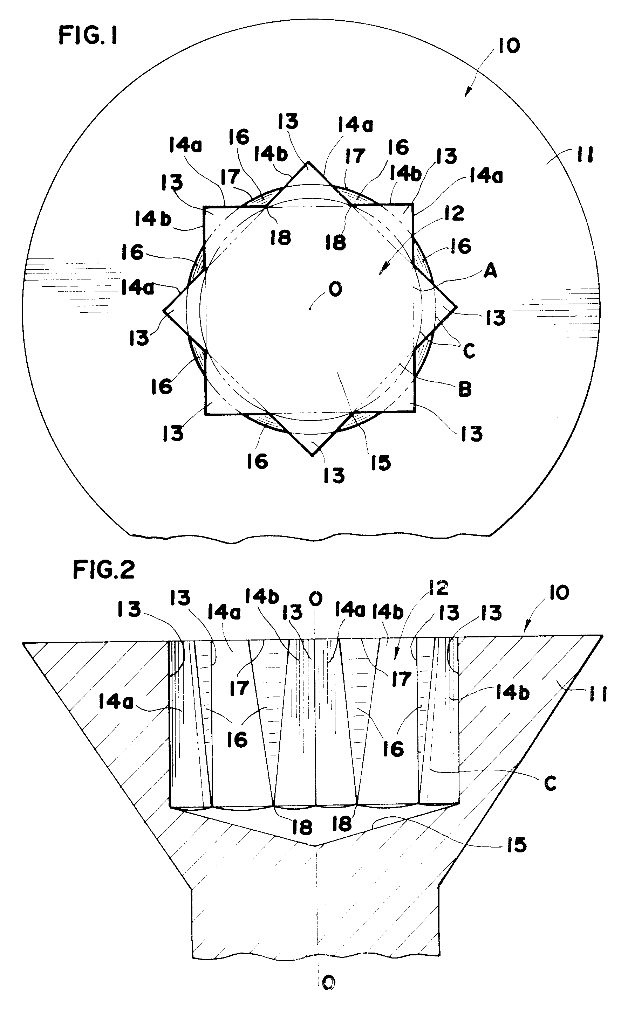

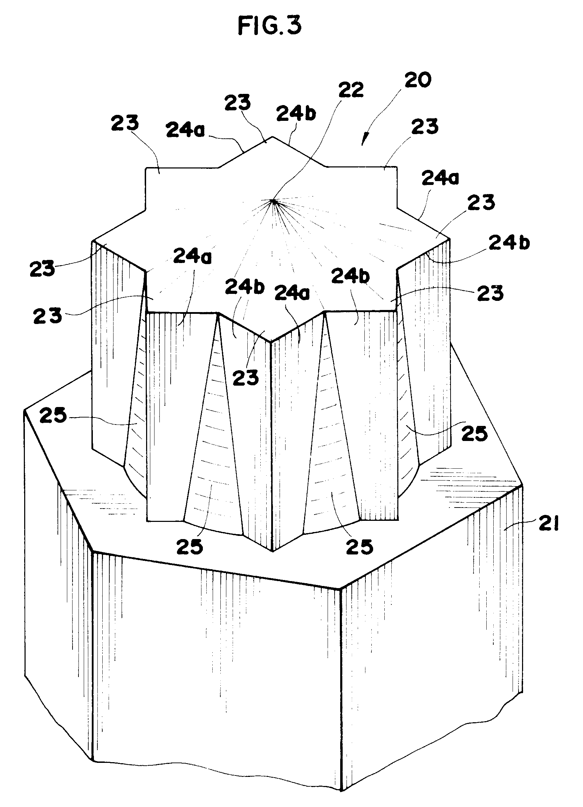

Referring to the drawings, Figures 1 and 2 show a principal portion of a recessed screw 10 while Figure 3 illustrates a driver bit 20 engageable with a recess 12 formed in the recessed screw 10.

The bit receiving recess 12 formed in a head of the screw has eight corner grooves 13 which are formed by superimposing two holes "A" and "B" one upon another, which holes are square in transverse cross section and arranged symmetrical with each other and with a phase shift of 45° around the longitudinal axis 0-0 of the recessed screw. In similar manner to the prior art recessed screw shown in Figures 9 and 10, each corner groove 13 is basically defined by a pair of side walls 14a and 14b which are perpendicular to each other and extend to a conical bottom 15 of the recess 12.

It is however to be noted that the pair of side walls 14a and 14b forming each corner groove 13 in the recessed screw 10 do extend in parallel with the screw axis 0-0.

The side walls 14a and 14b belonging to two adjacent corner grooves 13 and 13 intersect one another to form a ridge portion therebetween. These ridge portions protruding inwardly of the recess 12 provide curved sticking walls 16, which are slanted inwardly and gradually towards the bottom 15 of the recess 12 at a gentle angle (for example at about 10º or less). The curved sticking walls 16 enhance to the driver bit 20 such a biting function as will be detailed hereinafter. As indicated by the dotted lines in Figures 1 and 2, each sticking wall 16 is a portion of a conical surface "C" having a centre line, which coincides with the screw axis 0-0, and slanted inwardly towards the bottom 15 of the recess 12.

Therefore, the transverse width of each curved sticking wall 16 gradually decreases from its upper end 17 towards its lower end 18 where the sticking wall merges into the bottom 15 of the recess. Because the depth of the recess 12 must be designed to be appropriate to the thickness of the screw head 11, the lower ends 18 of the curved sticking walls 16 may have a certain width still at the border between each wall 16 and the bottom 15.

The driver bit 20 should in use tightly engage with the recess 12 in the recessed screw 10 in order to rotate the screw 10 and thus must be of a shape complementary to the recess 12 as shown in Figure 3.

The driver bit 20 comprises a shank 21 and a bit portion integrally extending from the shank and having at its extremity a central pointed end 22. The bit portion between the end 22 and the shank 21 is formed with eight V-shaped grooves which extend axially of the driver bit. Thus, eight blades 23 of a reversed V-shape in cross section are formed to be engageable with the corner grooves 13 in the recess 12. Side surfaces 24a and 24b of each blade 23 are perpendicular to each other, similarly to the side walls 14a and 14b of the corner grooves 13 which are perpendicular to each other as described above. Towards the bottom of each V-shaped groove, where the side surfaces 24a and 24b of the adjacent blades 23 and 23 adjoin one another, is a connecting plane 25. The planes 25 are conically curved walls tightly engageable with the similarly curved sticking walls 16 in the recess 12. Thus the connecting planes (ie curved walls) 25 are portions of the same conical surface "C" as are the curved sticking walls 16 of the recess 12.

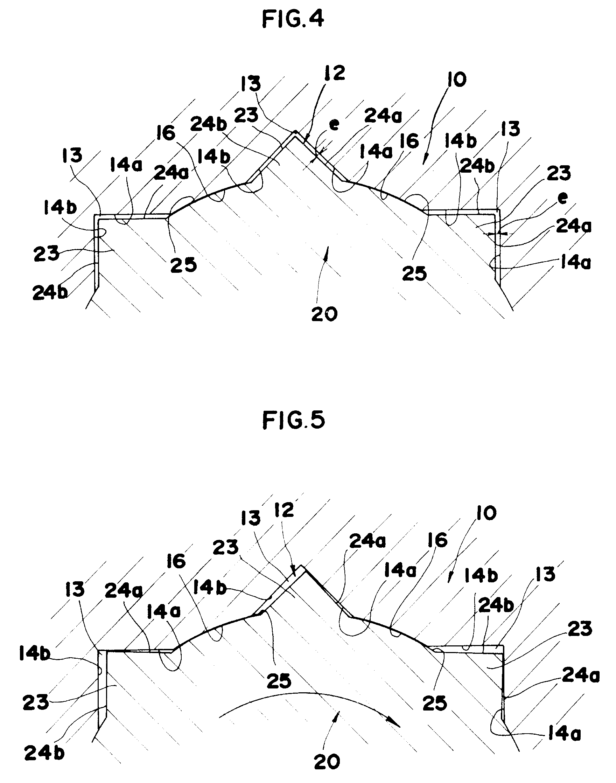

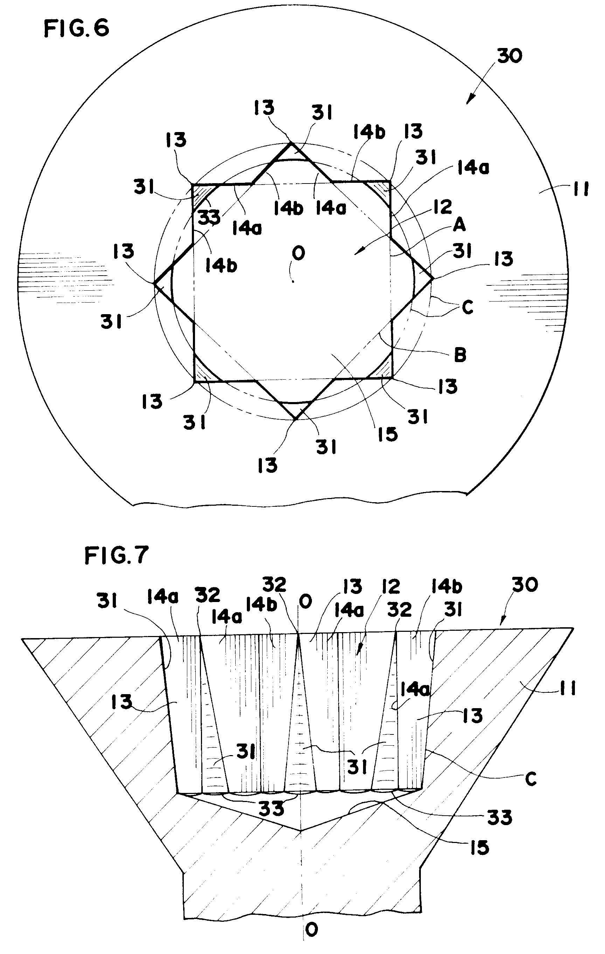

In use of the recessed screw 10, the driver bit 20 is inserted in the recess 12 as shown in Figure 4. The curved sticking walls 16 of the screw 10 come into close contact with the connecting planes (ie, curved walls) 25 of the bit 20, all of these walls being portions of the same and common conical surface "C". Consequently, a biting effect is produced between the walls 16 and the walls 26, and at the same time clearances "e" occur between each side wall 14a or 14b of the corner grooves 13 and each corresponding side surface 24a or 24b. The clearances "e" provide for smooth insertion of the driver bit 20 into the recess 12. In this initial biting state, an initial torque given to the driver bit 20 will be transmitted to the recessed screw 10 due to a friction between the bitten driver bit and the biting recess. When the torque acting on the driver bit 20 exceeds the friction, the bit will rotate only a little relative to the recessed screw 10 and take a position as shown in Figure 5. In this relative state of the members, outer edges of the side surfaces 24a of the eight blades 23 contact the side walls 14a forming the corner grooves 13. Following this step, a propelling torque of desired strength will be applied to the recessed screw 10. Since both the torque transmitting side surface 24a and the torque receiving side wall 14a extend in parallel with the axis 0-0, no component force is produced in the axial direction of the driver bit 20. In other words, only a twisting torque will be imparted by the driver bit 20 to the recessed screw 10. It is apparent that the forcible rotation of the driver bit 20 will never cause "ride-out" thereof, but will effectively transmit the necessary torque. The driver bit 20 will not thus slip out of the recess 12, even when rotated at high speeds.

Figures 6 and 7 show a recessed screw 30 of a second embodiment in which curved sticking walls 31 for producing a biting effect are formed at places where the side walls 14a and 14b of each corner groove 13 intersect one another, that is at the outermost regions of the corner grooves 13. Also, the sticking walls 31 provided here are portions of the conical surface "C" which is slanted inwardly towards the bottom 15 of the recess 12 and has an axis coinciding with the longitudinal screw axis 0-0, similarly to the recessed screw 10 illustrated in Figures 1 to 3. Each sticking wall 31 is widest at its lower end 33 adjoined to the bottom 15 of the recess 12, while its upper end merges into two upper and side edges of the adjacent corner grooves 13.

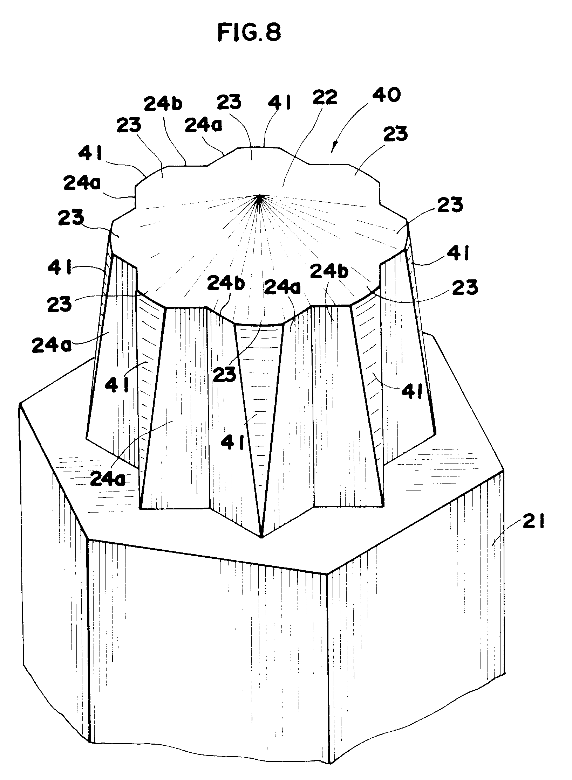

A driver bit 40 for tightening the recessed screw 30 is shown in Figure 8, in which a top of each blade 23 is formed as a conically curved wall 41 tightly engageable with the curved sticking wall 31. In similar manner to the walls 31, the walls 41 are also portions of the conical surface "C".

The operation for tightening the recessed screw 30 by means of the driver bit 40 is substantially identical with that for the recessed screw 10 and driver bit 20 which are shown in Figures 1 to 3. The biting effect is also produced by causing the curved walls 41 to contact the respective sticking walls 31. Outermost edges of the side surfaces of eight blades 23 will similarly come into contact with the side walls 14a of eight corner grooves 13 so that a sufficient torque can be applied to the screw 30, without causing ride-out of the driver bit 40.

In summary, an improved recessed screw and a driver bit engageable therewith which are formed as described above can be effective to ensure a sufficiently strong biting action between the screw and the bit, and at the same time a high torque can be transmitted therebetween without resulting in "ride-out" of the driver bit. Therefore, high speed rotation can be used without any problem.

This feature of the recessed screw and mating driver bit is most advantageous for self-tapping screws which must be driven under a strong torque to rotate at very high speeds.

## Claims

1. A recessed screw comprising:
   a recess (12) formed in a head of the screw (10) and engageable with a driver bit (20);
   the recess (12) being defined with a plurality of sticking walls (16) and a plurality of radial grooves (13);
   each sticking wall (16) being a portion of a conical surface (C) slanted inwardly towards a bottom (15) of the recess (12); and
   each radial groove (13) being disposed between two adjacent arms of the sticking walls (16, 37), extending outwards from the sticking walls in a radial direction, and being defined by vertical walls (14a, 14b) extending parallel to a longitudinal axis of the recessed screw (10, 30).

2. A driver bit having a protrusion (20) tightly fittable in the recess (12) of a recessed screw according to claim 1.

3. A recessed screw comprising:
   a recess (12) which is formed as a superimposition of two holes (A, B) square in their transverse cross sections;
   the holes (A, B) being disposed symmetrically with a phase shift of 45° around a longitudinal axis (0-0) of the recessed screw (10); and the recess (12) having:
   eight corner grooves (13), each being defined by a pair of side walls (14a, 14b) extending parallel to a longitudinal axis (0-0) of the recessed screw (10); and
   conically curved sticking walls (16) each formed at a place where one (14a) of the side walls forming one of the corner grooves intersects one (14b) of the side walls forming another of the corner grooves (13) adjacent to said one of the corner grooves (13);
   wherein each of the sticking walls (16) is a portion of a conical surface (C) which is inwardly slanted towards a bottom (15) of the recess (12).

4. A driver bit tightly fittable in the recess (12) of a recessed screw (10) according to claim 3, the driver bit (20) comprising:
   a shank (21);
   a bit portion extending from the shank and having at an extremity of the portion a pointed central end (22);
   the bit portion being formed with:
   eight V-shaped grooves which extend axially of the driver bit (20);
   eight blades (23) each defined between the adjacent ones of the V-shaped grooves; and
   planes (25) which are formed each at a bottom of each V-shaped groove so as to connect feet of the adjacent blades (23);
   wherein each plane (25) is a conically curved wall capable of coming into close contact with the conical surface (C) of any of the sticking walls (16) in the recess (12).

5. A recessed screw comprising:
   a recess (12) which is formed as a superimposition of two holes (A, B) square in their transverse cross sections;
   the holes (A, B) being disposed symmetrically with a phase shift of 45° around a longitudinal axis (0-0) of the recessed screw (10); and the recess (12) having:
   eight corner grooves (13), each being defined by a pair of side walls (14a, 14b) extending in parallel to a longitudinal axis (0-0) of the recessed screw (30); and
   conically curved sticking walls (31) each formed at a place where the side walls (14a, 14b) forming each corner groove (13) intersect one another;
   wherein each of the sticking walls (31) is a portion of a conical surface (C) which is inwardly slanted towards a bottom of the recess.

6. A driver bit tightly fittable in the recess (12) of a recessed screw (30) according to claim 5, the driver bit (40) comprising:
   a shank (21);
   a bit portion extending from the shank and having at an extremity of the portion a pointed central end (22);
   the bit portion being formed with:
   eight V-shaped grooves which extend axially of the driver bit (20);

eight blades (23) each defined between the two adjacent ones of the V-shaped grooves;

wherein a top of each blade (23) is a conically curved wall (41) capable of coming into close contact with the conical surface (C) of any of the sticking walls (31) in the recess (12).

7. A recessed screw comprising:

a recess (12) formed in a head of the screw (10, 30) and engageable with a driver bit (20);

the recess (12) being defined with a plurality of sticking walls (16, 31) and a plurality of radial grooves (13);

each sticking wall (16, 31) being a portion of a conical surface (C) slanted inwardly towards a bottom (15) of the recess (12); and

each radial groove being defined by a pair of vertical walls (14a, 14b) extending parallel to a longitudinal axis (0-0) of the recessed screw (10, 30) and each sticking wall (16, 31) being disposed between two adjacent ones of the vertical walls (14a, 14b).

FIG.1

FIG.2

7

## FIG.3

## FIG.4

## FIG.5

EP 0 488 541 A1

FIG.6

FIG.7

# FIG.8

**FIG.9**

**FIG.10**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | AT-B-388 215 (SFS STADLER AG) | 1,2,7 | F16B23/00 |
| Y | * page 2, line 31 - line 48 * | 3-6 | B25B15/00 |
| | * page 5, line 5 - line 47; figures 1-6 * | | |
| | --- | | |
| D,Y | US-A-3 604 305 (DREGER) | 3-6 | |
| | * abstract; figures 1-8 * | | |
| | --- | | |
| X | US-A-3 584 667 (REILAND) | 1,2,7 | |
| | * column 3, line 55 - column 5, line 20 * | | |
| | * column 6, line 56 - line 62 * | | |
| | * column 7, line 54 - line 75; figures 1-3,12-14 * | | |
| | --- | | |
| X | GB-A-2 153 033 (BULLONERIA BARGE SPA) | 1,2,7 | |
| | * page 1, line 103 - page 2, line 16; figures 1-5 * | | |
| | --- | | |
| X | US-A-2 173 707 (BROWN) | 1,2,7 | |
| | * page 2, right column, line 16 - line 30; figures 1-7 * | | |
| | --- | | TECHNICAL FIELDS SEARCHED (Int. Cl.5) |
| D,A | US-A-4 384 812 (MIYAGAWA) | 1,3,5 | |
| | * claim 1; figure 8 * | | |
| | | | F16B |
| | ----- | | B25B |

The present search report has been drawn up for all claims

| Place of search | Date of completion of the search | Examiner |
|---|---|---|
| THE HAGUE | 25 FEBRUARY 1992 | CALAMIDA G. |

EPO FORM 1503 03.82 (P0401)